(19) **Europäisches Patentamt**

**European Patent Office**

**Office européen des brevets**

(11) Veröffentlichungsnummer: **0 299 482 B1**

(12) ## EUROPÄISCHE PATENTSCHRIFT

(45) Veröffentlichungstag der Patentschrift: **25.03.92**

(21) Anmeldenummer: **88111331.0**

(22) Anmeldetag: **14.07.88**

(51) Int. Cl.⁵: **C04B 38/10**, C04B 18/02, C04B 40/04

(54) Verfahren zur Herstellung von Granulaten oder Formkörpern aus staubförmigen mineralischen Stoffen.

(30) Priorität: **14.07.87 DE 3723186**

(43) Veröffentlichungstag der Anmeldung:
**18.01.89 Patentblatt 89/03**

(45) Bekanntmachung des Hinweises auf die
Patenterteilung:
**25.03.92 Patentblatt 92/13**

(84) Benannte Vertragsstaaten:
**BE DE GB NL**

(56) Entgegenhaltungen:
**DE-A- 2 022 419**
**DE-A- 2 023 089**
**DE-C- 3 631 221**

(73) Patentinhaber: **STEAG-Entsorgungs-GmbH**
**Duisburger Strasse 170**
**4220 Dinslaken(DE)**

(72) Erfinder: **Hausmann, Richard**
**Rönskenstrasse 40**
**W-4223 Voerde(DE)**

(74) Vertreter: **Zenz, Joachim Klaus, Dipl.-Ing. et al**
**Patentanwälte Zenz, Helber & Hosbach Am**
**Ruhrstein 1**
**W-4300 Essen 1(DE)**

## Beschreibung

Die Erfindung bezieht sich auf ein Verfahren zur Herstellung von Granulaten oder Formkörpern aus staubförmigen mineralischen Stoffen, z.B. Flugasche, Tonstaub und/oder Gesteinsmehl, wenigstens einem hydraulischen Bindemittel, z.B. Zement, sowie Wasser und einem Schaumbildner, wobei zunächst aus Wasser und Schaumbildner ein Schaum hergestellt wird.

Ein solches Verfahren ist beschrieben in der DE-C-36 31 221 C1. Bei diesem Verfahren wird zuerst aus Schaumbildner und Wasser ein Schaum gebildet, und diesem Schaum werden nacheinander das hydraulische Bindemittel und der staubförmige mineralische Stoff zugemischt. Die Gefahr der Lunkerbildung ist jedoch erheblich, wenn die Schaummasse zum Zeitpunkt des Zumischens der Hauptkomponente, d.h. des staubförmigen mineralischen Feststoffs, bereits mit dem Bindemittel beladen ist.

Ein Verfahren, bei dem zunächst eine breiige formbare Masse aus staubförmigen mineralischen Stoffen mit Wasser hergestellt wird, ist aus der DE-C-20 23 089 bekannt. Anschließend wird dieser Masse eine Schaummasse aus Wasser und Schaumbildner und schließlich ein hydraulisches Bindemittel zur Härtung zugesetzt. Um ein homogenes Grundmaterial für Granulate oder Formkörper zu erhalten, ist es aber unerläßlich, alle Komponenten, d.h. die vorgemischten breiigen Massen, Schäume und Feststoffe, optimal miteinander zu vermengen. Dies bereitet bei dem bekannten Verfahren Schwierigkeiten. Problematisch ist, die Schaummasse mit der breiigen Masse so zu vermischen, daß der Schaum stabil bleibt. Zur Erleichterung und Verbesserung dieses Mischvorgangs können der breiigen Masse Verflüssigungsmittel (z.B. Elektrolyte) zuzugeben werden. Durch diese Maßnahme wird jedoch mindestens ein zusätzlicher Hilfsstoff nötig. Weiterhin ist es schwierig, trockenes hydraulisches Bindemittel (z.B. Zement) in einer letzten Zugabestufe gleichmäßig in einer schon thixotropen schaumigen Mischung zu verteilen. Dabei können sich Zementnester bilden. Nur bei homogener Wasser-Zement-Verteilung im richtigen Verhältnis ist ein ordnungsgemäßes Abbinden und eine optimale Betonfestigkeit zu erreichen.

Der Erfindung liegt die Aufgabe zugrunde, ein Verfahren zur Herstellung von Granulaten oder Formkörpern aus staubförmigen mineralischen Stoffen zur Verfügung zu stellen, bei dem die Komponenten in allen Verfahrensstufen optimal durchmischt werden und eine homogene Grundmasse entsteht. Das Verfahren soll eine innige Vermischung und Verteilung der verwendeten Stoffe innerhalb eines mikroporigen Schaums gewährleisten und soll dem Anwender das Einstellen der Verfahrensparameter über einen möglichst weiten Bereich zur Erzeugung unterschiedlicher Materialeigenschaften ermöglichen.

Nach der Erfindung wird diese Aufgabe dadurch gelöst, daß mit dem Schaum der staubförmige mineralische Stoffe innig vermischt wird und diesem Schaum gleichzeitig oder danach das hydraulische Bindemittel trocken oder in Form eines Schaumes, der durch Vermischen des Bindemittels mit einem Schaum aus Nasser und Schaumbildner hergestellt wurde, in dem gewünschten Mengenverhältnis zugemischt wird.

Der Erfindung liegt die Erkenntnis zugrunde, daß das Vermischen durch die Ungleichartigkeit der Komponenten Schaum, breiige Masse, Feststoff stark beeinträchtigt werden kann. Die Erfindung beschränkt sich daher auf das Vermischen von Schaum und Feststoff sowie von Schäumen untereinander. Beim Vermischen von Schaum und Feststoff läßt sich die über den Schaum zugeführte Flüssigkeitsmenge gut kontrollieren, und der fein verteilte Feststoff - wie etwa Flugasche, Tonstaub, Gesteinsmehl - länt sich auf der großen Oberfläche des Schaums gleichmänig verteilen. Die Sedimentation des Feststoffs unterbleibt durch die Oberflächenkräfte innerhalb des Schaums. Auf diese Weise führt die Erfindung zu einer homogenen Schaummasse aus Wasser, Schaumbildner und fein verteiltem Feststoff.

In bevorzugter Weiterbildung der Erfindung werden in parallelen Verfahrensabläufen Schaummassen aus Wasser, Schaumbildner und staubförmigen mineralischen Stoffen einerseits sowie Wasser, Schaumbildner und hydraulischem Bindemittel andererseits hergestellt und diese Schaummassen miteinander vermischt. Das Vermischen der beiden Feststoffkomponenten in mittels Wasser und Schaumbildner aufgeschäumter Form erleichtert wesentlich ihre innige Vermengung aufgrund einer Schmierwirkung zwischen den mikroporischen Bläschen der Schaummassen. So wird eine besonders gleichmäßige und stabile Endschaummasse ohne Zugabe unnötiger Hilfsstoffe erhalten.

Nach einem weiteren Merkmal kann das Verfahren kontinuierlich durchgeführt werden. Dies ist besonders zur Herstellung von Granulaten wünschenswert und fördert eine effektive Prozeßführung.

Die durchgehende Verwendung von Schaummassen anstatt breiiger Massen länt eine breitere Variation der Mengenverhältnisse der zugesetzten Stoffe zu als bisher.

In Weiterbildung der Erfindung wird die Endschaummasse zum Aushärten in Formen gefüllt, und die Formen werden mit einer feuchtigkeitsundurchlässigen Schicht abgedeckt. Dies ermöglicht zusätzliche Einflußnahme auf die Materialeigenschaften.

Das Füllen und Aushärten der Endschaummasse in Formen bedingt jedoch einen sehr großen Raumbedarf für das Aufstellen der Formen, der umso größer wird, je länger die Aushärtezeiten sind. Die ausgehärteten Rohlinge müssen zur Herstellung von Granulaten gebrochen und schließlich zur Gewinnung bestimmter Körnungsgrößen gesiebt werden. All das ist mit hohem zusätzlichen Arbeits- und Maschinenaufwand verbunden, der nur dann zu rechtfertigen ist, wenn Materialeigenschaften erzielt werden sollen, die nur durch das Aushärten der Masse in mit einer feuchtigkeitsundurchlässigen Schicht abgedeckten Formen erreicht werden können.

Ein besonderer Aspekt der Erfindung liegt daher darin, die Endschaummasse nicht erst in Formen zu füllen und Aushärten zu lassen, sondern direkt durch Ablaufen auf einem Pelletierteller oder durch Umlaufen in einer Granuliertrommel in Kugeln, Pellets bzw. Granulat aufzuteilen. Die Größe der Pellets oder Granulatteilchen richtet sich nach der Neigung und der Umlaufgeschwindigkeit der Granuliertrommel bzw. des Pelletiertellers. Dadurch, daß die aus der Endschaummasse abgeteilten Teilchen einer Rollbewegung unterworfen werden, erhalten sie eine glatte, geschlossene Oberfläche, behalten aber im Inneren ihre aufgeschäumte Struktur.

Einige Verfahrensbeispiele werden anhand der Zeichnung erläutert. In der Zeichnung zeigen:

Fig. 1 ein Fließbild zu einem ersten Verfahrensbeispiel, bei dem Zement als hydraulisches Bindemittel einerseits und Flugasche als staubförmiger mineralischer Stoff andererseits in paralleler Verfahrensführung aufgeschäumt und die Schäume danach gemischt werden;

Fig. 2 ein Fließbild zu einem Verfahrensbeispiel, bei dem die Zementschaummasse nach vorheriger Zugabe von Flugasche hergestellt wird;

Fig. 3 ein Fließbild zu einem Verfahrensbeispiel mit im wesentlichem gleichzeitiger Zugabe von Flugasche und Zement zur Bildung der Endschaummasse.

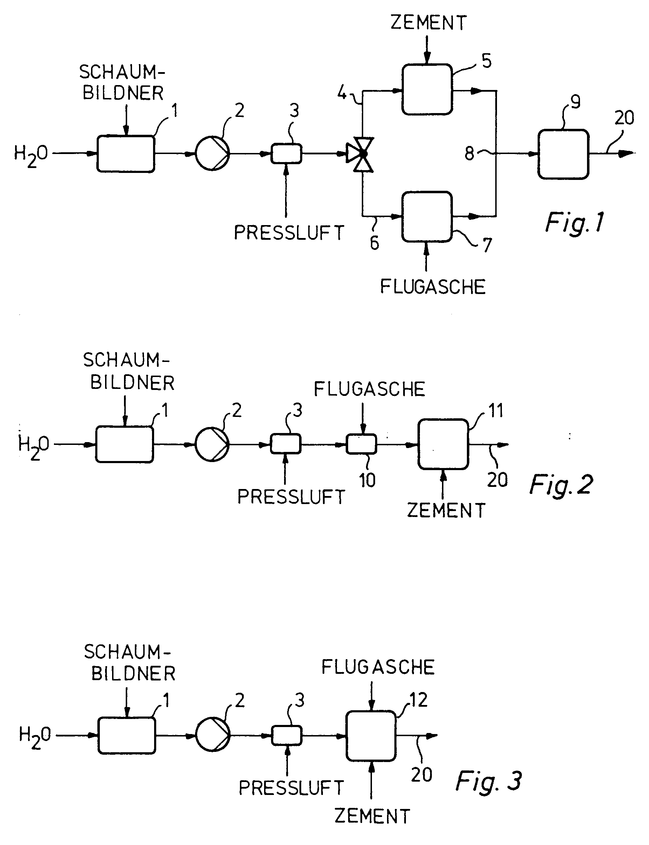

In dem Verfahrensbeispiel nach Fig. 1 werden zunächst in einem geeigneten Behälter 1 Wasser und Schaumbildner - beispielsweise 2% Schaumbildner Nr. 500-4A (Henkel) - zusammengeführt. Die Lösung wird über eine Pumpe 2 gefördert und mit Preßluft an Zugabestelle 3 aufgeschäumt. Der Schaum wird nach einer Verzweigung über den Weg 4 einem ersten Mischer 5 zugeführt und mit über einen getrennten Einlaß zugeführtem Zement gemischt. Eine zweite Teilmenge des Schaums wird über einen zweiten Weg 6 einem zweiten Mischer 7 zugeführt und mit Flugasche gemischt.

Die Flugasche ist in der Regel bei Anlieferung bereits angefeuchtet, um Staubemissionen beim Transport zu vermeiden.

Das Volumengewichtsverhältnis des Schaums wird über die Preßluftzufuhr geregelt. Die gewünschten Mengenverhältnisse zwischen Zement, Flugasche und Flüssigkeit werden über die Zudosierung der Feststoffe bzw. durch langsames oder schnelleres Schaumfördern gesteuert. Die aus den Mischern 5 und 7 abgenommenen Zement- und Flugaschenschäume werden zusammengeführt (8) und in einem nachfolgenden Mischer 9 zu einer homogenen Endschaummasse vermischt, deren Weiterverarbeitung sich an den Mischerausgang anschließt.

In einer in Fig. 2 gezeigten abgewandelten Verfahrensführung wird zunächst ebenso wie in Fig. 1 eine Schaummasse aus Wasser und Schaumbildner mit Preßluft aufgeschäumt. Dieser Grundschaummasse wird bereits auf dem Wege zum Mischer 11 die Flugasche zugegeben. Dabei kann die Flugasche über eine in 10 mit Schaum gespeiste Förderschnecke dem Mischer 11 zugeführt werden. Im Mischer 11 wird Zement als hydraulisches Bindemittel mit dem Flugaschenschaum vermischt. Die Dosierung der zugegebenen Stoffe kann wie im ersten Beispiel gesteuert werden. Die Endschaummasse verläßt Mischer 11 über Ausgang 20 zur Weiterverarbeitung.

Im Verfahrensbeispiel gemäß Fig. 3 werden wiederum Wasser und Schaumbildner in Behälter 1 gegeben, über die Pumpe 2 gefördert und durch Preßluft an der Zugabestelle 3 aufgeschäumt. Der Schaum wird einem Mischer 12 zugeführt, in den sowohl Flugasche als auch Zement im wesentlichen gleichzeitig mit den vorgesehenen Mengenströmen eingespeist werden. Schaum, Flugasche und Zement werden im Mischer zu einer fertigen Endschaummasse vermischt, die über den Weg 20 der Weiterverarbeitung zugeführt wird.

Im Rahmen des Erfindungsgedankens sind verschiedene Abwandlungen der zuvor beschriebenen Verfahrensbeispiele möglich. So kann die Schaumbildung und die Zumischung eines staubförmigen Stoffes (z.B. Flugasche und/oder Zement) beispielsweise in einer geeigneten Förderschnecke in einem Verfahrensschritt erfolgen. Die parallele, also getrennte Herstellung von zwei Schaummassen (Zement und Flugasche) mit anschließendem Mischen der beiden Schaummassen zur Gewinnung der Endschaummasse (Fig. 1) optimiert die Homogenität der Endschaummasse.

**Patentansprüche**

1. Verfahren zur Herstellung von Granulaten oder Formkörpern aus staubförmigen mineralischen Stoffen, z.B. Flugasche, Tonstaub und/oder Gesteinsmehl, wenigstens einem hydraulischen Bindemittel, z.B. Zement, sowie Wasser und einem Schaumbildner, wobei zunächst aus Wasser und Schaumbildner ein Schaum hergestellt wird (1...3),
**dadurch gekennzeichnet,**
daß mit dem Schaum der staubförmige mineralische Stoff innig vermischt wird (7; 10; 12) und diesem Schaum gleichzeitig oder danach das hydraulische Bindemittel trocken (11; 12) oder in Form eines Schaumes, der durch Vermischen des Bindemittels mit einem Schaum aus Wasser und Schaumbildner hergestellt wurde (5), in dem gewünschten Mengenverhältnis zugemischt wird.

2.  Verfahren nach Anspruch 1, dadurch gekennzeichnet, daß Wasser, Schaumbildner und staubförmige mineralische Stoffe einerseits sowie Wasser, Schaumbildner und hydraulisches Bindemittel andererseits in parallelen Verfahrensabläufen (4; 6) aufgeschäumt und daß danach die daraus entstandenen Schäume gemischt werden (8).

3.  Verfahren nach Anspruch 1, dadurch gekennzeichnet, daß der Schaummasse aus Wasser, Schaumbildner und staubförmigen mineralischen Stoffen das hydraulische Bindemittel im wesentlichen trocken zugegeben und mit der Schaummasse vermischt wird.

4.  Verfahren nach Anspruch 1, dadurch gekennzeichnet, daß dem Schaum aus Wasser und Schaumbildner staubförmige mineralische Stoffe und hydraulisches Bindemittel einem Mischungsbehälter (12) im wesentlichen gleichzeitig zugeführt und innig miteinander vermischt werden.

5.  Verfahren nach einem der Ansprüche 1 bis 4, dadurch gekennzeichnet, daß Wasser und Schaumbildner durch Preßluft aufgeschäumt werden (3).

6.  Verfahren nach einem der Ansprüche 1 bis 5, dadurch gekennzeichnet, daß das Verfahren kontinuierlich durchgeführt wird.

7.  Verfahren nach einem der Ansprüche 1 bis 6, dadurch gekennzeichnet, daß die Endschaummasse zum Aushärten in Formen gefüllt wird und die Formen mit einer feuchtigkeitsundurchlässigen Schicht, z.B. einer Silikonschicht, abgedeckt werden.

8.  Verfahren nach Anspruch 7, dadurch gekennzeichnet, daß das ausgehärtete Material nach dem Entformen gebrochen und sortiert wird.

9.  Verfahren nach einem der Ansprüche 1 bis 6, dadurch gekennzeichnet, daß die Endschaummasse auf einem Pelletierteller ablaufen gelassen und in Pellets aufgeteilt wird.

10. Verfahren nach Anspruch 9, dadurch gekennzeichnet, daß die Pelletgröße durch Änderung des Neigungswinkels des Pelletiertellers und durch Besprühen der Masse auf dem Teller bestimmt wird.

11. Verfahren nach einem der Ansprüche 1 bis 6, dadurch gekennzeichnet, daß die Endschaummasse in einer Granuliertrommel umlaufen gelassen und in Pellets (Granulat) aufgeteilt wird.

12. Verfahren nach Anspruch 11, dadurch gekennzeichnet, daß die Pelletgröße bestimmt wird durch Änderung der Drehgeschwindigkeit bzw. des Neigungswinkels der Granuliertrommel.

## Claims

1.  Process for the manufacture of granules or moulded bodies from finely divided mineral substances, for example flue dust, clay dust and/or stone dust, at least one hydraulic binding means, for example cement, as well as water and a foaming agent, wherein initially a foam is produced from water and foaming agent (1...3), characterised thereby that the finely divided mineral substance is intimately mixed with the foam (7; 10; 12), and the hydraulic binding means dry (11; 12) or in the form of a foam, which was produced by mixing the binding means with a foam of water and foaming agent (5), is admetered in the desired quantity ratio to this foam at the same time or subsequently.

2.  Process according to claim 1, characterised thereby that water, foaming agent and finely divided mineral substances on the one hand as well as water, foaming agent and hydraulic binding means on the other hand are foamed up in parallel process sequences (4; 6) and that subsequently the foams resulting therefrom are mixed (8).

3.  Process according to claim 1, characterised thereby that the hydraulic binding means is fed substantially dry to the foamed mass of water, foaming agent and finely divided mineral substance and is mixed with the foamed mass.

4. Process according to claim 1, characterised thereby that the foam of water and foaming agent, finely divided mineral substances and hydraulic binding means are fed to a mixing container (12) substantially at the same time and intimately mixed together.

5. Process according to one of claims 1 to 4, characterised thereby that water and foaming agent are foamed up by compressed air (3).

6. Process according to one of claims 1 to 5, characterised thereby that the process is carried out continuously.

7. Process according to one of claims 1 to 6, characterised thereby that the end foamed mass is poured into moulds for hardening and the moulds are coated with a moisture-impermeable layer, for example a silicone layer.

8. Process according to claim 7, characterised thereby that after removal from the moulds the hardened material is broken and graded.

9. Process according to one of claims 1 to 6, characterised thereby that the end foamed mass is allowed to run off onto a pelletising plate and is divided up into pellets.

10. Process according to claim 9, characterised thereby that the pellet size is determined through changing the angle of inclination of the pelletising plate and through spraying of the mass onto the plate.

11. Process according to one of claims 1 to 6, characterised thereby that the end foamed mass is allowed to circulate in a granulating drum and is divided up into pellets (granules).

12. Process according to claim 11, characterised thereby that the pellet size is determined by changing the rotational speed or the angle of inclination of the granulating drum.

**Revendications**

1. Procédé de confection de granulés ou de corps formés à partir de substances minérales pulvérulentes, par ex. cendre volante, poussière d'argile et/ou de pierre, d'au moins un liant hydraulique, du ciment par ex., en ajoutant de l'eau et un agent moussant, une mousse étant réalisée d'abord à partir d'eau et d'un agent moussant (1...3)
**caractérisé par le fait**
que la substance minérale pulvérulente est intimement mêlée à la mousse (7; 10; 12) et qu'à cette mousse, simultanément ou ensuite, est mélangé, dans les proportions souhaitées, le liant hydraulique sec (11; 12) ou sous forme d'une mousse, qui a été obtenue en mélangeant le liant à une mousse constituée d'eau et d'agent moussant (5).

2. Procédé selon spécification 1, caractérisé par le fait que l'eau, l'agent moussant et les substances minérales pulvérulentes d'une part ainsi que de l'eau, de l'agent moussant et du liant hydraulique de l'autre sont transformés en mousse lors de procédures parallèles (4; 6) et que les mousses en résultant sont ensuite mélangées (8).

3. Procédé selon spécification 1, caractérisé par le fait qu'à la masse de mousse constituée d'eau, d'agent moussant et de substances minérales pulvérulentes est ajouté le liant hydraulique, sec essentiellement, et mélangé à la masse de mousse.

4. Procédé selon spécification 1, caractérisé par le fait qu'à la mousse constituée d'eau et d'agent moussant sont ajoutés des substances minérales pulvérulentes et un liant hydraulique dans un réservoir de malaxage (12), en majeure partie simultanément et y sont mélangés intimement.

5. Procédé selon l'une des spécifications 1 à 4 caractérisé par le fait que l'eau et l'agent moussant sont transformés en mousse par de l'air comprimé (3).

6. Procédé selon l'une des spécifications 1 à 5, caractérisé par le fait que le procédé est réalisé en continu.

7. Procédé selon l'une des spécifications 1 à 6, caractérisé par le fait que la masse de mousse finale est versée dans des moules pour durcissement et que ceux-ci sont recouverts par une couche imperméable à l'humidité, une couche de silicone par exemple.

8. Procédé selon spécification 7, caractérisé par le fait que le produit durci est brisé et trié après le démoulage.

9. Procédé selon l'une des spécifications 1 à 6 caractérisé par le fait que la masse de mousse finale s'écoule sur un plateau d'agglomération et de subdivision en boulettes.

10. Procédé selon spécification 9, caractérisé par le fait que la taille des boulettes est déterminée en modifiant l'angle d'inclinaison du plateau et en pulvérisant la masse sur celui-ci.

11. Procédé selon l'une des spécifications 1 à 6 caractérisé par le fait que la masse de mousse finale circule dans un tambour de granulation et est subdivisée en boulettes (granulés).

12. Procédé selon spécification 11, caractérisé par le fait que la taille des boulettes est déterminée en modifiant la vitesse de rotation resp. l'angle d'inclinaison du tambour de granulation.

ZEMENT

SCHAUM-
BILDNER

H$_2$O

PRESSLUFT

FLUGASCHE

*Fig.1*

SCHAUM-
BILDNER

FLUGASCHE

H$_2$O

PRESSLUFT

ZEMENT

*Fig.2*

SCHAUM-
BILDNER

FLUGASCHE

H$_2$O

PRESSLUFT

ZEMENT

*Fig. 3*